(19) **Europäisches Patentamt**
**European Patent Office**
**Office européen des brevets**

(11) Veröffentlichungsnummer: **0 225 657 B1**

(12) # EUROPÄISCHE PATENTSCHRIFT

(45) Veröffentlichungstag der Patentschrift:
30.01.91 Patentblatt 91/05

(51) Int. Cl.⁵: **H02J 3/14**, G05D 23/19

(21) Anmeldenummer: 86201937.9

(22) Anmeldetag: 06.11.86

(54) Verfahren zum Steuern mehrerer elektrischer Lasten.

(30) Priorität: 08.11.85 DE 3539581

(43) Veröffentlichungstag der Anmeldung:
16.06.87 Patentblatt 87/25

(45) Bekanntmachung des Hinweises auf die
Patenterteilung:
30.01.91 Patentblatt 91/05

(84) Benannte Vertragsstaaten:
DE FR GB IT SE

(56) Entgegenhaltungen:
EP-A- 0 004 199
EP-A- 0 053 383
FR-A- 2 254 900
GB-A- 2 041 673
PATENTS ABSTRACTS OF JAPAN, Band 7, Nr.
234 (P-230)[1379], 18. Oktober 1983; & JP-A-58
123 114

(73) Patentinhaber: Philips Patentverwaltung
GmbH
Wendenstrasse 35 Postfach 10 51 49
D-2000 Hamburg 1 (DE)
DE
Patentinhaber: N.V. Philips'
Gloeilampenfabrieken
Groenewoudseweg 1
NL-5621 BA Eindhoven (NL)
FR GB IT SE

(72) Erfinder: Braun, Walter
Schlosserstrasse 46
D-5110 Alsdorf (DE)
Erfinder: Kersten, Reinhard, Dr. rer. nat.
Meischenfeld 29
D-5100 Aachen (DE)
Erfinder: Kuhl, Egbert
Weberstrasse 13
D-5100 Aachen (DE)

(74) Vertreter: Kupfermann, Fritz-Joachim,
Dipl.-Ing. et al
Philips Patentverwaltung GmbH
Wendenstrasse 35 Postfach 10 51 49
D-2000 Hamburg 1 (DE)

**Beschreibung**

Die Erfindung bezieht sich auf ein Verfahren zum Steuern mehrerer, einzeln und unabhängig voneinander steuerbarer, getakteter Lasten, insbesondere elektrischer Heizlasten eines Elektroherde, zur möglichst geringen Schaltstoßbelastung, insbesondere Flickerbelastung, eines Wechselstromnetzes, wobei die Lasten aus einer gemeinsamen Phase des Wechselstromnetzes gespeist und jeweils zu Beginn ihrer Taktzeit eingeschaltet werden, wobei die Taktzeiten der verschiedenen Lasten gleich lang sind und alle, weder aus- noch auf volle Leistung geschalteten Lasten in einem Schaltzyklus zeitlich aneinandergekettet an das Netz geschaltet werden

Beim Steuern der elektrischen Lasten eines Elektroherdes, d. h. also z. B. der Herdplatten, begnügt man sich im allgemeinen mit einem periodischen Ein- und Ausschalten der Lasten mittels eines Bimetall-Relais. Die Taktzeiten sind dabei im allgemeinen lang, so daß die daraus folgenden Leistungs- bzw. Temperaturschwankungen nicht immer befriedigend durch die thermische Trägheit des Systems, insbesondere der Herdplatte selbst, ausgeglichen werden. Durch den Einsatz mechanischer Relais steigen mit zunehmender Taktfrequenz die hochfrequenten Störungen an, die von Kontaktfunken und/oder durch Schalten außerhalb der Spannungsnulldurchgänge ausgelöst werden.

Dieses Problem wird umgangen durch eine bekannte elektronische Schaltung, die mittels Halbleiterbauelementen die Lasten im Spannungs- bzw. Stromnulldurchgang schaltet und damit hochfrequente Störungen drastisch vermindert. Die Lasten werden dabei über ganze Vielfache der Netzperiode eingeschaltet, wobei die Einschaltzeit typischerweise mehrere Sekunden beträgt. Eine deutliche Verkürzung der Taktzeiten ist bei dieser Schaltung nicht möglich, da dann bereits eine zu starke Lastwechselbelastung und ein zu starkes Flickern auftreten. Als Flickern bezeichnet man störende Lichtschwankungen, die durch das Takten von Leistungsverbrauchern an der gleichen Phase des Netzes ausgelöst werden. Dabei werden Taktfrequenzen unterhalb von 25 Hz bereits deutlich wahrgenommen, besonders störend jedoch diejenigen im Bereich um 10 Hz. Die derzeit gültige internationale Norm für die zulässige Flickerdosis ist in der IEC Publication 533 (Disturbances in supply systems caused by household appliances and similar electrical equipment) festgelegt. In dieser Norm wird jeder Laständerung eine sogenannte Erholzeit zugeordnet, deren Dauer von der Größe der Laständerung abhängig ist. Die Norm besagt nun, daß während einer Beobachtungszeit von 5 bis 15 Minuten die Summe der Erholzeiten (entsprechend den während der Beobachtungszeit vorgenommenen Laständerungen) nicht größer sein darf als die Beobachtungszeit selbst.

Aus der DE-OS 30 03 455 ist eine Leistungssteuerschaltung bekannt, bei der jede Last für eine Netzperiode eingeschaltet wird. Werden durch die Steuerschaltung z. B. vier Lasten geschaltet, so wird eine einzelne Heizlast bei voller Leistung während jeder vierten Netzperiode eingeschaltet, bei halber Last jede achte Netzperiode usf.. Bei dieser Schaltungsart der Lasten ist das Flickern jedoch nicht optimiert. Das Flickern wird noch dadurch verstärkt, daß die einzelne Last in ihrer Stromaufnahme auf die mehrfache Leistung ausgelegt sein muß ; dies ergibt sich dadurch, daß die Last bei voller Leistung nur ein Teil der Zeit eingeschaltet ist und deshalb bei einer gewünschten Heizleistung von z. B. 2 kW und vier zu schaltenden Lasten die Heizwendel eine Stromaufnahme entsprechend 8 kW aufweisen muß. Diese 8 kW-Last wird bei voller Leistung jede vierte Netzperiode eingeschaltet. Dies ist bezüglich des Flickerns sehr ungünstig ; auch müssen die Heizwendeln unnötig groß dimensioniert werden.

Aus der EP-OS 0.004.199 sind ein Verfahren und eine Anordnung zum Einspeisen elektrischen Stromes in eine Anzahl elektrischer Lasten bekannt. Diese Anordnung umfaßt eine Anzahl von Schalterelementen, die zwischen einer Wechselspannungsquelle und den Lasten angeordnet sind, eine erste Signalerzeugungsschaltung zum Erzeugen eines Reihenfolgesignals, das einer Periodendauer von nN vollständigen Perioden der Wechselspannungsquelle besitzt, wobei N die Anzahl der elektrischen Lasten und n eine beliebige natürliche Zahl ist, sowie eine zweite Signalerzeugungsschaltung, die mit der ersten Signalerzeugungsschaltung gekoppelt ist zum Erzeugen von Steuersignalen für die Schalterelemente. Diese Steuersignale wiederholen sich in jeder Periode des Reihenfolgesignals und überführen die Schalterelemente zu Zeitpunkten in einen leitenden Zustand, die um n ganze Periodendauern der Wechselstromquelle beabstandet sind, und halten die Schalterelemente im leitenden Zustand für jeweils eine

Periodendauer von d ganzen Periodendauern der Wechselspannungsquelle, wobei d einen Tastverhältnis-Faktor bildet und größer oder gleich n, jedoch kleiner oder gleich nN ist.

Es ist Aufgabe der Erfindung, ein Verfahren zum Steuern mehrerer getakteter elektrischer Lasten, die aus einer gemeinsamen Phase eines Wechselstromnetzes gespeist werden und unabhängig voneinander in ihrer Leistungsaufnahme steuerbar sind, zu schaffen, durch das das Netz mit möglichst wenigen und möglichst geringen Lastwechseln belastet wird und das somit kurze Taktzeiten ermöglicht.

Die gestellte Aufgabe ist erfindungsgemäß dadurch gelöst, daß beim Abschalten der vorherigen Last die nächste Last eingeschaltet wird und ein solcher Schaltzyklus jeweils zu Beginn einer gemeinsamen Taktzeit unabhängig von der Länge des Schaltzyklus neu gestartet wird.

Bei diesem Verfahren werden also die Lasten zeitlich aneinandergekettet an das Netz geschaltet, d. h. daß zuerst Last 1, nach deren Ausschalten sofort Last 2, nach deren Ausschalten wiederum sofort Last 3 usw. eingeschaltet werden. Eine solche Einschaltkette der Lasten beginnt am Anfang jeder neuen gemeinsamen Taktzeit. Dies bedeutet, daß, auch wenn zu Beginn einer neuen Taktzeit der vorige Einschaltzyklus noch nicht beendet ist, gleichwohl ein neuer Schaltzyklus beginnt. Auf diese Weise können im Extremfall ebenso viele Schaltzyklen wenigstens zeitweise nebeneinander ablaufen, wie es zu schaltende Lasten gibt. Die verschiedenen Schaltzyklen laufen dabei aber um jeweils eine gemeinsame Taktzeit zeitlich zueinander verschoben ab.

Die Belastung der gemeinsamen Phase des Wechselstromnetzes bezüglich der Lastwechselbelastung des Netzes wird durch dieses Verfahren zur Steuerung der Lasten zum einen dadurch verringert, daß infolge des Verkettungsprinzips die Zahl der Laständerungen gegenüber unkorreliert geschalteten Lasten verringert wird, da die Lasten zeitlich direkt aufeinanderfolgend an das Netz geschaltet werden. Außerdem wird durch das Verkettungsprinzip des Verfahrens bezüglich der Größe der Laständerung nur noch der Differenzbetrag zeitlich aufeinander folgender Lasten wirksam und nicht, wie bei unkorreliert geschalteten Lasten, der Absolutbetrag jeder Last.

Wesentlich ist, daß es sich um eine Steuerung mehrerer Lasten handelt, welche in ihrer Leistungsaufnahme unabhängig voneinander steuerbar sind. Die Lasten werden in der oben beschriebenen Art und Weise in einem Schaltzyklus aneinandergekettet an das Netz geschaltet. Dieses Prinzip der Aneinanderkettung bedingt für eine in einem Schaltzyklus hinten angeordnete, also zeitlich nach anderen Lasten geschaltete Last, daß deren Einschaltzeitpunkt (und Ausschaltzeitpunkt) von der Einschaltdauer der vorher eingeschalteten abhängt. Es ergibt sich also keine immer gleiche Struktur der Schaltzyklen bzw. der Ein- und Ausschaltzeitpunkte der Lasten ; vielmehr verändern sich diese in Abhängigkeit von den eingestellten Leistungen. Ist eine Last völlig ausgeschaltet oder auf volle Leistung geschaltet (und somit dauernd eingeschaltet), findet sie in dem Schaltzyklus keinen Platz, und die nachfolgenden Lasten rücken entsprechend nach vorne auf.

Nach einer weiteren Ausgestaltung der Erfindung ist vorgesehen, daß die Ein- und Ausschaltzeiten der Lasten in den verschiedenen Schaltzyklen gegebenenfalls so variiert werden, daß die Lasten über mehrere Taktzeiten gemittelt die gewünschte Leistung aufnehmen. Werden die Lasten ausschließlich während der Spannungsnulldurchgänge des Netzes geschaltet, ist die Leistungsaufnahme der Lasten nur in Stufen veränderbar. Liegt die gewünschte Leistungsaufnahme einer Last zwischen zwei solchen Stufen, so werden die Schaltzeiten über mehrere Schaltzyklen so verändert, daß zwischen den beiden möglichen Schaltstufen hin- und hergeschaltet wird, so daß im Mittel die gewünschte Leistungsaufnahme erfolgt.

Nach einer weiteren Ausgestaltung der Erfindung ist vorgesehen, daß die Reihenfolge der in einem Schaltzyklus zeitlich aneinandergekettet eingeschalteten Lasten so gewählt wird, daß Lasten mit geringer Leistungsaufnahme zu Beginn und am Ende des Schaltzyklus und Lasten mit größerer Leistungsaufnahme in der Mitte des Schaltzyklus eingeordnet werden.

Die Lastwechselbelastung des Netzes ist besonders gering, wenn die Lasten innerhalb eines Schaltzyklus so angeordnet werden, daß möglichst kleine Laständerungen auftreten. Dies ist dann der Fall, wenn zu Beginn und am Ende eines Schaltzyklus Lasten kleinerer Leistungsaufnahme geschaltet werden und in der Mitte dieses Schaltzyklus die Lasten mit größerer Leistungsaufnahme, da dann innerhalb eines Schaltzyklus die auftretenden Laständerungen relativ selten auftreten und/oder relativ gering sind.

Nach weiteren Ausgestaltungen der Erfindung ist vorgesehen, daß die Reihenfolge der in einem Schaltzyklus zeitlich aneinandergekettet eingeschalteten Lasten so gewählt wird, daß die Lasten nach ihren Leistungen monoton steigend oder monoton fallend geordnet werden.

Eine weitere, relativ günstige leistungsmäßige Anordnung der Lasten in einem Schaltzyklus ist die monoton fallende oder steigende Anordnung, bei der jeweils am Anfang bzw. am Ende eine relativ große Schaltflanke auftritt, die anderen Schaltflanken jedoch sehr gering sind.

Nach einer weiteren Ausgestaltung der Erfindung ist vorgesehen, daß für die größte getaktete Einzellast und die maximale zulässige Lastwechselbelastung des Netzes die kleinstmögliche Taktzeit bestimmt und als gemeinsame Taktzeit eingesetzt wird.

Durch Aneinanderketten der Lasten in der oben beschriebenen Weise ist die Lastwechselbelastung des Netzes durch einen Schaltzyklus maximal so groß, wie die Belastung des Netzes durch die größte Einzellast wäre, da die Summe der durch die Lasten verursachten Laständerungen maximal so groß ist wie die Laständerungen, die bei einem alleinigen Schalten der größten Einzellast auftreten würden. Beträgt also z. B. die größte Einzellast 2 kW und die anderen Lasten 1 kW, so ist die Flickerbelastung des Netzes durch alle Lasten höchstens so groß wie durch diese 2-kW-Einzellast allein.

Die gemeinsame Taktzeit kann also einfach aus der für die größte Einzellast zulässigen Lastwechselbelastung bestimmt werden. Durch das Verfahren der Aneinanderkettung und geeigneten Reihenfolge der Lastverteilung wird bei dieser Taktzeit die zulässige Lastwechselbelastung des Netzes nie überschritten, unabhängig davon, welche Lasten eingeschaltet sind bzw. auf welche Leistung diese Lasten geschaltet sind.

Nach einer weiteren Ausgestaltung der Erfindung ist vorgesehen, daß die gemeinsame Taktzeit im Rahmen der maximal zulässigen Lastwechselbelastung kleinstmöglich gewählt wird.

Durch besondere Konstellationen, d. h. durch eine solche zeitliche Aufeinanderfolge der Lasten innerhalb einer Einschaltkette, bei der relativ kleine Laständerungen auftreten, ist eine weitere Verringerung der gemeinsamen Taktzeit möglich. Besteht also der Wunsch, die Taktzeit für eine bestimmte Schaltkonstellation der Lasten weiter zu optimieren, d. h. zu minimieren, so kann für diese gerade gegebene Einschaltkonstellation der Lasten die Lastwechselbelastung des Netzes ausgerechnet werden und gegebenenfalls die Taktzeit verkürzt werden.

Nach einer weiteren Ausgestaltung der Erfindung ist vorgesehen, daß bereits zu Beginn des gemeinsamen ersten Zeittaktes die Ein- und Ausschaltzeitpunkte der elektrischen Lasten in allen, gegebenenfalls nebeneinander ablaufenden Schaltzyklen berechnet und die Lasten entsprechend geschaltet werden.

Sind z. B. alle Lasten auf eine relativ große Leistung geschaltet, so läuft ein einzelner Schaltzyklus dieser Lasten über mehrere Taktzeiten. Nach dem Einschalten der Lasten wird sich also der stabile Schaltzustand, d. h. der Zustand, in dem alle Schaltzyklen parallel nebeneinander ablaufen, erst nach mehreren Taktzeiten einstellen. Es ist deshalb zur weiteren Optimierung möglich, bereits beim Einschalten der Lasten, d. h. also zu Beginn der ersten Taktzeit, diesen normalerweise erst später erreichten stationären Schaltzustand zu errechnen und die Lasten sofort ab Beginn des ersten Zeittaktes entsprechend zu schalten.

Nach einer weiteren Ausgestaltung der Erfindung ist vorgesehen, daß die Lasten verschiedene Prioritäten haben und bei einem Überschreiten einer maximal zulässigen Gesamtlast die Einschaltzeiten von Lasten geringerer Priorität so weit verkürzt werden, daß die zulässige Gesamtlast wieder unterschritten wird.

Das Verfahren zum Steuern mehrerer elektrischer und unabhängig voneinander steuerbarer Lasten gestattet außerdem relativ einfach eine Überwachung der Gesamtlast, die sich aus den gerade eingeschalteten Lasten und ihrer Einschaltdauer ergibt. Es ist nun möglich, eine zulässige Gesamtlast vorzugeben und den Schaltzustand der Einzellasten ständig darauf zu überwachen, ob diese zulässige vorgegebene Gesamtlast überschritten wird. Ist dies der Fall, so können die Einschaltzeiten von Lasten geringerer Priorität so weit verkürzt werden, daß die vorgegebene Gesamtlast nicht mehr überschritten wird. Dies ermöglicht z. B. das Anschalten eines Elektroherdes an eine Phase eines Wechselstromnetzes, die beim Schalten aller Lasten des Elektroherdes auf volle Leistung überlastet würde. Dies wird insbesondere dann von Interesse sein, wenn an alte, bestehende Elektro-Installationen neue Geräte angeschlossen werden.

Nach einer weiteren Ausgestaltung der Erfindung ist vorgesehen, daß die Lasten mit relativ wenig schwankender Einschaltdauer in dem Einschaltzyklus vorne eingeordnet werden.

Ist von vornherein bekannt, daß einzelne Lasten auf einen relativ konstanten Leistungswert geschaltet bleiben, andere jedoch in der eingeschalteten Leistung relativ stark variiert werden, so ist es günstig, die Lasten mit relativ wenig schwankender Einschaltdauer in den Einschaltzyklen vorne anzuordnen, da sich dann die Ein- und Ausschaltzyklen der dieser Last in einem Schaltzyklus nachfolgenden Lasten relativ wenig ändern und so der Rechenaufwand der Steuerung vermindert wird.

Ein Ausführungsbeispiel der Erfindung wird anhand der Zeichnungen näher erläutert. Es zeigen :

Fig. 1 ein Blockschaltbild einer Schaltungsanordnung für das Verfahren,

Fig. 2 die Schaltzyklen über mehrere Takte von vier relativ kurz eingeschalteten Lasten,

Fig. 3 die Schaltzyklen über mehrere Takte von vier mittellang eingeschalteten Lasten,

Fig. 4 die Schaltzyklen über mehrere Takte von vier fast auf volle Last geschalteten Lasten,

Fig. 5 ein Diagramm aus der derzeit gültigen Flickernorm zur Bestimmung der Erholzeit in Abhängigkeit von der Laständerung,

Fig. 6 einige Schaltbeispiele für Lasten und die sich jeweils nach der derzeit gültigen Norm erhebenden Erholzeiten.

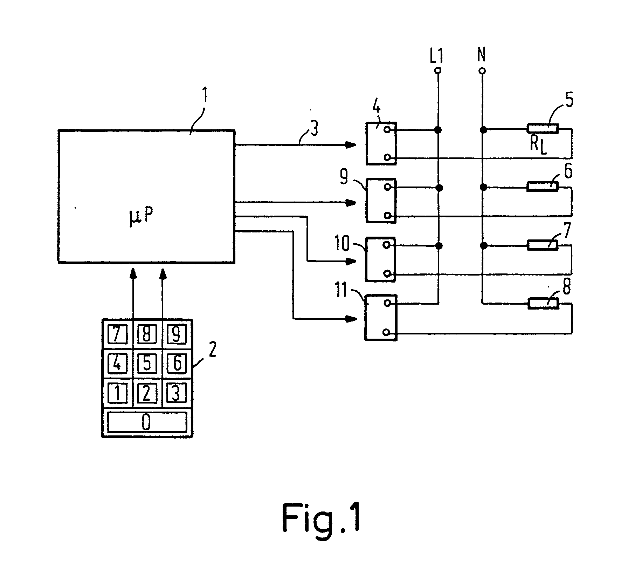

Fig. 1 zeigt ein Blockschaltbild einer Schaltungsanordnung, die für das Verfahren zum Steuern mehrerer elektrischer, in ihrer Leistungsaufnahme unabhängig voneinander steuerbarer Lasten ausgelegt ist. Der Mikroprozessor 1 übernimmt zentrale Steuerungsaufgaben. Er ist einerseits mit einem Tastenfeld 2 verbunden, das der Eingabe von Daten dient und damit die Aufgabe eines Steuerpultes hat. Über dieses Tastenfeld 2 werden an den Mikroprozessor 1 die benötigten Daten gegeben, wie z. B. die gewünschten Leistungen der einzelnen Lasten. Außerdem ist der Mikroprozessor über eine Verbindung 3 mit einem elektrischen Lastrelais 4 verbunden. Dieses Lastrelais 4 wird durch TTL-Signale auf der Leitung 3 geschaltet. Das Lastrelais 4 ist außerdem einerseits mit einer Netzphase L1 und andererseits mit einer Last 5 verbunden. Das Lastrelais schaltet bei Anliegen eines entsprechenden TTL-Signals auf der Leitung 3 im nächsten Spannungsnulldurchgang der Netzphase L1 um. Diese Last 5, die beispielsweise eine Herdplatte darstellt, ist außerdem mit dem Null-Leiter N des Wechselstromnetzes verbunden. Auf gleiche Weise sind weitere Lasten 6, 7 und 8 mittels elektrischer Lastrelais 9, 10 und 11 an die gleiche Phase des Wechselstromnetzes schaltbar. Die Lasten 5, 6, 7 und 8 werden also nicht direkt über das Tastenfeld 2 an das Wechselstromnetz L1, N geschaltet. Es werden von ihm lediglich die gewünschten Daten an den Mikroprozessor 1 gegeben, der dann die Lasten 5, 6, 7 und 8 entsprechend dem Verfahren schaltet. Die Zahl der Lasten wird dabei durch den Anwendungsfall bestimmt.

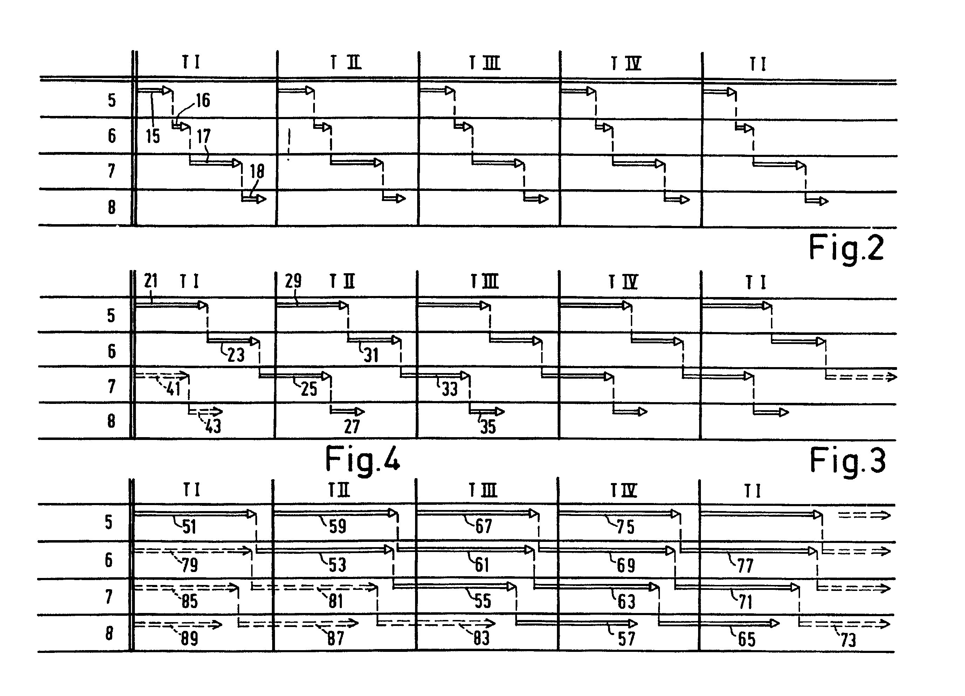

Fig. 2 zeigt in symbolischer Darstellung den zeitlichen Ablauf mehrerer Takte und der in ihnen ablaufenden Schaltzyklen. Zu Beginn des Taktes I wird die Last 5 während einer durch die gewünschte Leistung vorgegebenen Zeit eingeschaltet, was in Fig. 2 durch den Pfeil 15 symbolisiert wird. Sofort nach Ausschalten der Last 5 wird die Last 6 eingeschaltet, angedeutet durch Pfeil 16. Die Last 6 bleibt kürzer eingeschaltet als die Last 5. Nach ihrem Ausschalten wird wiederum die Last 7, symbolisiert durch Pfeil 17, und nach deren Ausschalten die Last 8, symbolisiert durch Pfeil 18, eingeschaltet. In diesem Beispiel ist die Summe der Einschaltzeiten der vier Lasten, also eines Schaltzyklus, kürzer als eine Taktzeit.

Zu Beginn des Taktes II werden die vier Lasten wiederum in gleicher Weise in einem Schaltzyklus an das Netz geschaltet, wobei in diesem und den folgenden Beispielen davon ausgegangen wird, daß die eingestellten Leistungen der einzelnen Lasten sich nicht verändern.

Das Zeitdiagramm in Fig. 3 zeigt symbolisch dargestellt die Einschaltzeiten der gleichen vier Lasten, die jedoch in diesem Beispiel auf höhere Leistungen geschaltet sind. Zu Beginn des Taktes I wird wiederum die Last 5 eingeschaltet (Pfeil 21), gefolgt von Last 6 (Pfeil 23), von Last 7 (Pfeil 25) und Last 8 (Pfeil 27). Noch während der Einschaltdauer der Last 7 beginnt bereits der neue Takt II. Zu diesem Zeitpunkt wird ein neuer Einschaltzyklus gestartet, indem zunächst die Last 5 eingeschaltet wird, dargestellt durch Pfeil 29. Zu gleicher Zeit läuft jedoch die erste Einschaltkette weiter, in diesem Beispiel bedeutet dies, daß die Last 7 weiterhin eingeschaltet bleibt, was durch Pfeil 25 dargestellt ist. Im zweiten Schaltzyklus wird nach dem Ausschalten der Last 5 die Last 6 eingeschaltet (Pfeil 31). Während der Einschaltdauer dieser Last im Schaltzyklus II ist der Schaltzyklus I damit beendet, daß die Last 8 abgeschaltet wird. Währenddessen läuft der zweite Schaltzyklus weiter : Nach dem Abschalten der Last 6 wird Last 7 eingeschaltet (Pfeil 33) und anschließend Last 8 (Pfeil 35).

In diesem Beispiel weist also ein Schaltzyklus jeweils eine Länge von etwa 1 1/2 Takten auf. Zu Beginn jedes neuen Taktes wird ein neuer Schaltzyklus begonnen, ohne daß der schon laufende Schaltzyklus abgebrochen wird. Auf diese Weise laufen in diesem Beispiel etwa während der ersten Hälfte jeden Taktes zwei Schaltzyklen parallel zueinander ab.

Werden bereits zu Beginn des Zeittaktes I die Ein- und Ausschaltzeitpunkte der elektrischen Lasten in den folgenden Schaltzyklen berechnet und die Lasten entsprechend diesem "eingeschwungenen Zustand" geschaltet, so tritt der durch die gestrichelt gezeichneten Pfeile 41 und 43 markierte Fall ein. Es wird dann vom Mikroprozessor bereits zu Beginn des Taktes I der stabile Schaltzustand errechnet, wie er sich in diesem Beispiel normalerweise erst zu Beginn des Taktes II einstellt. Dies bedeutet, daß bereits zu Beginn des Taktes I die Last 7 für eine Restzeit eingeschaltet wird, was in der Figur durch den Pfeil 41 dargestellt ist. Dieser gleichsam in der Mitte begonnene Schaltzyklus wird dann normal zu Ende geführt, was bedeutet, daß nach dem Ausschalten der Last 7 die Last 8 eingeschaltet wird (Pfeil 43).

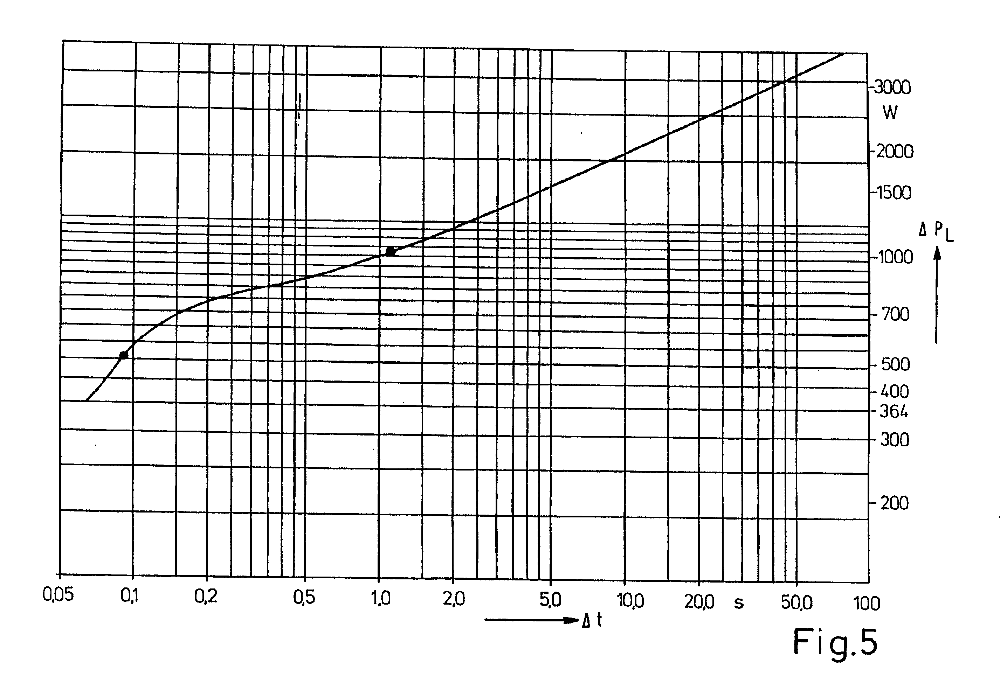

In Fig. 4 sind wiederum die Einschaltzyklen der vier gleichen Lasten symbolisch dargestellt, wobei in diesem Beispiel die einzelnen Lasten 5 bis 8 auf nahezu volle Leistung geschaltet sind. Dementsprechend beträgt schon die Einschaltdauer der Last 5 während des Taktes I (Pfeil 51) nahezu die Länge des ersten Taktes. Wie in dem Beispiel entsprechend den Fig. 2 und 3 werden dann die Lasten 6, 7 und 8 zeitlich nacheinander in einer Einschaltkette eingeschaltet, was in der Figur durch die Pfeile 53, 55 und 57 markiert ist. Durch die langen Einschaltzeiten endet der erste Einschaltzyklus in diesem Beispiel erst etwa in der Mitte des Taktes IV. Zu Beginn des Taktes II wird ein weiterer Einschaltzyklus begonnen, der durch die Pfeile 59, 61, 63 und 65 markiert ist. Ebenfalls noch während des Ablaufens des ersten Schaltzyklus wird zu Beginn des Taktes III der dritte Schaltzyklus gestartet, dargestellt durch die Pfeile 67, 69, 71 usf.. Noch während die Last 8 im Rahmen des ersten Schaltzyklus eingeschaltet ist (Pfeil 57), wird zu Beginn des Taktes IV die Last 5 bereits zum vierten Mal eingeschaltet, was durch den Pfeil 75 markiert ist.

Durch die relativ langen Einschaltzeiten der Lasten in diesem Beispiel und da zu Beginn jeder Taktzeit ein neuer Schaltzyklus begonnen wird, sind ab Beginn des Taktes IV immer drei oder vier Lasten gleichzeitig eingeschaltet.

Auch in diesem Beispiel ist wieder der Fall eingetragen, daß bereits zu Beginn des ersten Taktes die Ein- und Ausschaltzeiten aller Lasten, die sich im eingeschwungenen Zustand einstellen, ausgerechnet werden und die Lasten entsprechend geschaltet werden. Dies bedeutet, daß der eingeschwungene Zustand, wie er sich in diesem Beispiel erst mit Takt IV einstellt, bereits zu Beginn des Taktes I bestimmt wird und die Lasten entsprechend geschaltet werden. So beginnt zu diesem Zeitpunkt ein durch die Pfeile 79, 81 und 83 markierter Schaltzyklus bereits mit Last 6, ein weiterer, durch die Pfeile 85 und 87 markierter Schaltzyklus mit Last 7 und ein weiterer Schaltzyklus, markiert durch den Pfeil 89, mit Last 8.

In den Fig. 2, 3 und 4 sind drei Beispiele für die gleichen vier Lasten dargestellt, in denen die Lasten auf verschieden hohe Leistungen geschaltet sind. Geht man in den vorliegenden Beispielen davon aus, daß alle vier Lasten die gleiche Stromaufnahme haben, so gilt z. B. für das in Fig. 2 dargestellte Beispiel, daß zu Beginn des Taktes I eine Einschaltflanke und kurze Zeit vor Ende des ersten Taktes eine Ausschaltflanke eintritt. Das gleiche gilt für jeden weiteren Takt. Dieses bedeutet ein besonders günstiges Lastwechselverhalten, da in jedem Takt lediglich zweimal eine Änderung der Stromaufnahme auftritt. Das gleiche gilt für die in Fig. 3 und 4 dargestellten Beispiele. So tritt z. B. im eingeschwungenen Zustand während des Taktes 3 in Fig. 3 zu Beginn des Taktes eine Einschaltflanke und etwa während der Mitte des Taktes eine Ausschaltflanke auf. Auch in diesem Beispiel gilt das gleiche für die weiteren folgenden Takte. Das gleiche gilt für das in Fig. 4 dargestellte Beispiel.

Die sich durch die Ein- und Ausschaltflanken ergebende Lastwechselbelastung des Wechselstromnetzes bleibt also konstant, d. h. sie ist unabhängig von der für die verschiedenen Lasten gewählten Leistungseinstellung.

Haben die vier Lasten verschiedene Leistungsaufnahme, so ist es günstig, diese innerhalb eines Schaltzyklus so anzuordnen, daß die kleinen Lasten zu Beginn und zu Ende und größeren Lasten zur Mitte des Schaltzyklus eingeschaltet werden. Dies bedeutet in den vorliegenden Beispielen, daß die Lasten 1 und 4 kleinere und die Lasten 2 und 3 größere Lasten sind. Da diese Stromaufnahme durch die physikalischen Eigenschaften, z. B. der Heizwendeln, bestimmt ist, ist also die günstigte Reihenfolge fest vorgegeben und muß nicht je nach den Schaltzuständen der Lasten neu berechnet werden.

In Fig. 5 ist ein Diagramm aus der derzeit gültigen Flickernorm (IEC Publication 533) dargestellt, in der festgelegt ist, wie groß die Lastwechselbelastung des Netzes durch einen Verbraucher sein darf. Mittels des Diagrammes in Fig. 5 läßt sich in Abhängigkeit von der vorgenommene Ohmschen Laständerung die dazugehörige Erholzeit t bestimmen. So beträgt z. B. für eine Laständerung von 500 W die Erholzeit etwa 0,1 sec und für eine Laständerung von 1000 W etwa 1,2 sec. Sollen also beispielsweise Lasten von 1000 W geschaltet werden, so darf während eines Zeitraumes von 5 bis 15 Minuten nur alle 1,2 sec eine Ein- oder Ausschaltflanke auftreten. Werden in einem bestimmten Zeitraum verschiedene Lasten verschiedener Leistungen geschaltet, so ist für jede einzelne Lastflanke die Erholzeit zu bestimmen. Die Summe der Erholzeiten aller in dieser Zeitspanne aufgetretenen Laständerungen darf dabei nicht größer sein als die Zeitspanne selbst.

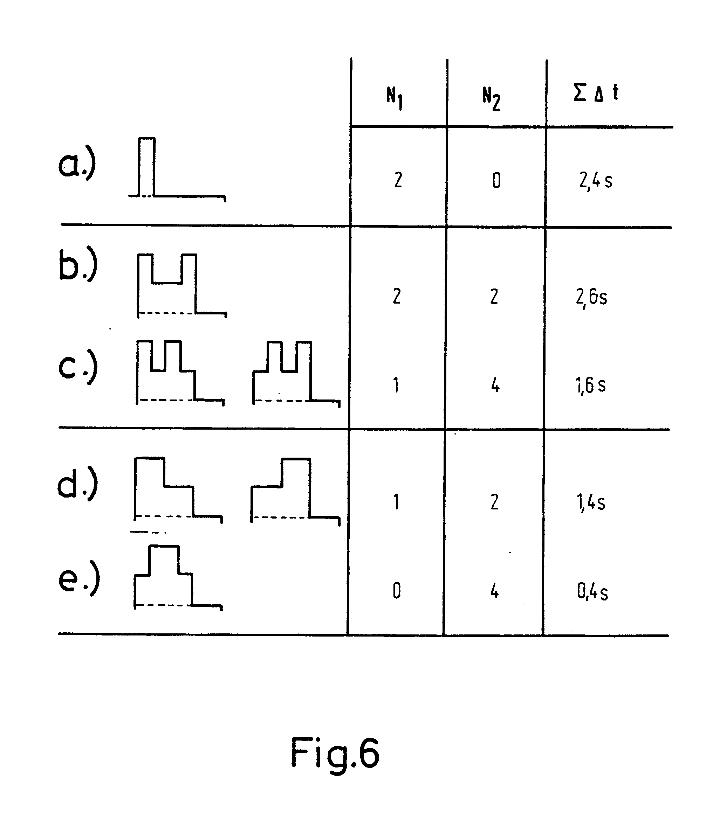

In Fig. 6 sind einige Schaltkonstellationen von Lasten und die sich jeweils ergebende Summe der Erholzeiten dargestellt. Im ersten Beispiel wird nur eine Last mit einer Leistungsaufnahme von 1000 W geschaltet. Es treten also zwei Lastsprünge von je 1000 W auf, so daß die Summe der Erholzeiten 2,4 sec beträgt, was bedeutet, daß der dargestellte Schaltzyklus dieser Last sich nur alle 2,4 sec wiederholen darf.

In dem ferner in der Fig. 6 dargestellten Schaltbeispiel B werden zwei Lasten mit je 1000 W Leistungsaufnahme und zwei Lasten mit je 500 W Leistungsaufnahme in der Weise geschaltet, daß zu Beginn und Ende des Schaltzyklus jeweils die 1000 W-Lasten und in der Mitte die beiden Lasten mit 500 W angeordnet sind. Es ergeben sich dabei innerhalb eines solchen Schaltzyklus zwei Lastsprünge zu je 1000 W und zwei Lastsprünge zu je 500 W. Entsprechend dem in Fig. 5 dargestellten Diagramm ergibt dies eine Summe der Erholzeiten von 2,6 sec. In dem ebenfalls in Fig. 6 dargestellten Beispiel C werden die gleichen Lasten geschaltet wie in Beispiel B, wobei diese jedoch so angeordnet sind, daß abwechselnd eine Last größerer Leistung und eine Last kleinerer Leistung geschaltet werden. Es ergeben sich dann pro Schaltzyklus ein großer Lastsprung und vier kleine Lastsprünge ; daraus ergibt sich eine Summe der Erholzeiten von 1,6 sec. In den Beispielen D und E sind wiederum die gleichen vier Lasten günstiger angeordnet, und zwar in der Weise, daß im Beispiel D die Lasten nach ihren Leistungen monoton fallend bzw. steigend angeordnet sind, was zu einer Summe der Erholzeiten von 1,4 sec führt. Im Beispiel E sind die Lasten größerer Leistung in der Mitte und die Lasten kleinerer Leistung am Anfang und am Ende angeordnet. Dieses führt zu keinem großen Lastsprung, sondern lediglich zu vier kleinen Lastsprüngen. Daraus ergibt sich nach der Flickernorm eine Summe der Erholzeiten von nur 0,4 sec.

Aus den Beispielen B bis E, in denen jeweils die gleichen vier Lasten geschaltet werden, ist ersichtlich, daß eine Anordnung der Lasten innerhalb eines Schaltzyklus entsprechend Beispiel E mit deutlichem Abstand das günstigste Ergebnis liefert ; d. h. daß bei diesem Beispiel die kürzestmögliche Taktzeit lediglich 0,4 sec beträgt. Auch die im Beispiel D dargestellte Ordnung der Lasten innerhalb eines Schaltzyklus ist noch relativ günstig. Es ergibt sich hier eine mögliche Taktzeit von 1,4 sec.

In dem Verfahren zum Steuern mehrerer elektrischer Lasten nach der Erfindung kann also im einfachsten Falle lediglich von der größten Einzellast ausgegangen werden. In den in Fig. 6 dargestellten Beispielen B bis E würde das bedeuten, daß lediglich die größte Einzellast (1000 W) berücksichtigt wird und eine Taktzeit von 2,4 sec gewählt wird. Soll die Taktzeit kürzestmöglich werden, z. B. um das Regelverhalten günstiger zu gestalten, so werden bei z. B. zwei Lasten zu je 1000 W und zwei Lasten zu je 500 W die Lasten entsprechend dem in Fig. 6 dargestellten Beispiel E geschaltet, bei dem die Summe der Erholzeiten am kleinsten ist. In diesem Beispiel kann dann die Taktzeit auf lediglich 0,4 sec verkürzt werden.

Die in Figur 1 dargestellte Schaltungsanordnung, die nach dem Verfahren zum Steuern mehrerer elektrischer Lasten arbeitet, ist in einfacher Weise in einem elektrischen Heizgerät, beispielsweise Elektroherd einsetzbar. Bei einem Elektroherd stellen die Lasten 5, 6, 7 und 8 die Heizungswicklungen der Kochplatten, des Backofens usw. dar. Das Tastenfeld 2 entspricht in diesem Falle dem Bedien-Feld des Elektroherdes, mittels dessen dem in das Gerät eingebauten Mikroprozessor 1 die gewünschten Heizleistungen bzw. Temperaturwerte der Kochplatten, des Backofens usw. eingegeben werden.

## Ansprüche

1. Verfahren zum Steuern mehrerer, einzeln und unabhängig voneinander steuerbarer, getakteter Lasten, insbesondere elektrischer Heizlasten eines Elektroherdes, zur möglichst geringen Schaltstoßbelastung, insbesondere Flickerbelastung, eines Wechselstromnetzes, wobei die Lasten aus einer gemeinsamen phase des Wechselstromnetzes gespeist und jeweils zu Beginn ihrer Taktzeit eingeschaltet werden, wobei die Taktzeiten der verschiedenen Lasten gleich lang sind und alle, weder aus- noch auf volle Leistung geschalteten Lasten in einem Schaltzyklus zeitlich aneinandergekettet an das Netz geschaltet werden, dadurch gekennzeichnet, daß beim Abschalten der vorherigen Last die nächste Last eingeschaltet wird, und ein solcher Schaltzyklus jeweils zu Beginn einer gemeinsamen Taktzeit unabhängig von der Länge des Schaltzyklus neu gestartet wird.

2. Verfahren nach Anspruch 1, dadurch gekennzeichnet, daß die Ein- und Ausschaltzeiten der Lasten in den verschiedenen Schaltzyklen gegebenenfalls so variiert werden, daß die Lasten über mehrere Taktzeiten gemittelt die gewünschte Leistung aufnehmen.

3. Verfahren nach Anspruch 1 oder 2, dadurch gekennzeichnet, daß die Reihenfolge der in einem Schaltzyklus zeitlich aneinandergekettet eingeschalteten Lasten so gewählt wird, daß Lasten mit geringerer Leistungsaufnahme zu Beginn und am Ende des Schaltzyklus und Lasten mit größerer Leistungsaufnahme in der Mitte des Schaltzyklus eingeordnet werden.

4. Verfahren nach Anspruch 1 oder 2, dadurch gekennzeichnet, daß die Reihenfolge der in einem Schaltzyklus zeitlich aneinandergekettet eingeschalteten Lasten so gewählt wird, daß die Lasten nach ihren Leistungen monoton steigend geordnet werden.

5. Verfahren nach Anspruch 1 oder 2, dadurch gekennzeichnet, daß die Reihenfolge der in einem Schaltzyklus zeitlich aneinandergekettet eingeschalteten Lasten so gewählt wird, daß die Lasten nach ihren Leistungen monoton fallend geordnet werden.

6. Verfahren nach einem oder mehreren der Ansprüche 1 bis 5, dadurch gekennzeichnet, daß für die größte getaktete Einzellast und die maximale zulässige Lastwechselbelastung des Netzes die kleinstmögliche Taktzeit bestimmt und als gemeinsame Taktzeit eingesetzt wird.

7. Verfahren nach einem oder mehreren der Ansprüche 1 bis 6, dadurch gekennzeichnet, daß die gemeinsame Taktzeit im Rahmen der maximal zulässigen Lastwechselbelastung des Netzes kleinstmöglich gewählt wird.

8. Verfahren nach einem oder mehreren der Ansprüche 1 bis 7, dadurch gekennzeichnet, daß bereits zu Beginn des ersten gemeinsamen Zeittaktes die Ein- und Ausschaltzeitpunkte der elektrischen Lasten in allen, gegebenenfalls nebeneinander ablaufenden Schaltzyklen berechnet und die Lasten entsprechend geschaltet werden.

9. Verfahren nach einem oder mehreren der Ansprüche 1 bis 8, dadurch gekennzeichnet, daß die Lasten verschiedene Prioritäten haben und bei einem Überschreiten einer maximal zulässigen Gesamtlast die Einschaltzeiten von Lasten geringerer Priorität so weit verkürzt werden, daß die zulässige Gesamtlast nicht überschritten wird.

10. Verfahren nach einem oder mehreren der Ansprüche 1 bis 9, dadurch gekennzeichnet, daß die Lasten mit relativ wenig schwankender Einschaltdauer in dem Einschaltzyklus vorne eingeordnet werden.

## Claims

1. A method of controlling several clocked loads controllable individually and independently of each other, more particularly electrical heating loads of an electric stove, for minimizing the demand on an AC mains due to switching transients, more particularly due to flickering, the loads being fed from a common phase of of the AC mains and being switched on each time at the beginning of their clock periods, the clock periods of the various loads being of equal length, while all loads which are neither switched off nor switched to their full power are switched to the mains in a switching cycle according to a continuously interlocked time sequence, characterized in that, when the preceding load is switched off, the next load is switched on, and in that such a switching cycle is started anew each time at the beginning of a common clock period irrespective of the length of the switching cycle.

2. A method as claimed in Claim 1, characterized in that the switching-on and switching-off times of the loads in the various switching cycles may be varied in such a way that the loads, averaged over several clock periods, consume the desired power.

3. A method as claimed in Claim 1 or 2, characterized in that the order of succession of the loads switched on in a switching cycle interlocked in time is chosen in such a way that loads having a lower power consumption are arranged at the beginning and at the end of the switching cycle and loads having a larger power consumption are arranged in the middle of the switching cycle.

4. A method as claimed in Claim 1 or 2, characterized in that the order of succession of the loads switched on in a switching cycle interlocked in time is chosen in such a way that the loads are arranged in order of uniformly increasing power.

5. A method as claimed in Claim 1 or 2, characterized in that the order of succession of the loads switched on in a switching cycle interlocked in time is chosen in such a way that the loads are arranged in order of uniformly decreasing power.

6. A method as claimed in any one of Claims 1 to 5, characterized in that the smallest possible clock period is determined for the largest clocked individual load and the maximum permissible demand on the mains due and is used as common clock period.

7. A method as claimed in any one of Claims 1 to 6, characterized in that the common clock period is chosen as small as possible with respect to the maximum permissible demand on the mains due to load variations.

8. A method as claimed in any one of Claims 1 to 7, characterized in that the switching-on and switching-off moments of the electrical loads in all switching cycles which may proceed simultaneously are calculated already at the beginning of the first common clock period, and that the loads are switched correspondingly.

9. A method as claimed in any one of Claims 1 to 8, characterized in that the loads have different priorities and, when a maximum permissible overall load is exceeded, the switching-on durations of loads of lower priority are shortened to such an extent that the permissible overall load limit is observed again.

10. A method as claimed in any one of Claims 1 to 9, characterized in that the loads having a switching-on duration which fluctuates only comparatively slightly are arranged in the first part of the switching-on cycle.

**Revendications**

1. Procédé de conduite de plusieurs charges rythmées par horloge pouvant être commandées individuellement et indépendamment l'une de l'autre, en particulier des charges de chauffage électriques d'une cuisinière électrique, d'une manière propre à susciter le moins possible de sollicitations par à-coups de commutation, en particulier des sollicitations de papillotement dans un réseau alternatif, suivant lequel les charges sont alimentées par une phase commune du réseau alternatif et sont chaque fois enclenchées au début de leur temps d'horloge, les temps d'horloge des diverses charges étant de même longueur et toutes les charges étant connectées en enchaînement temporel au réseau dans un cycle de commutation, indépendamment du fait qu'elles soient ou non réglées sur la pleine puissance, caractérisé par le fait que, lors du déclenchement de la charge précédente, la charge suivante est enclenchée et qu'un tel cycle de commutation recommence chaque fois au début d'un temps d'impulsion commun indépendamment de la longueur de ce cycle de commutation.

2. Procédé suivant la revendication 1, caractérisé en ce qu'il est prévu que les temps d'enclenchement et de déclenchement des charges dans les divers cycles de commutation soient éventuellement amenés à varier d'une manière telle que les charges absorbent en moyenne la puissance souhaitée sur plusieurs temps d'horloge.

3. Procédé suivant la revendication 1 ou 2, caractérisé en ce qu'il est prévu que la séquence des charges enclenchées en enchaînement temporel dans un cycle de commutation soit choisie telle que des charges à faible absorption de puissance soient situées au début et à la fin du cycle de commutation et que les charges à plus forte absorption de puissance soient situées au milieu du cycle de commutation.

4. Procédé suivant la revendication 1 ou 2, caractérisé en ce qu'il est prévu que la séquence des charges enclenchées en enchaînement temporel dans un cycle de commutation soit choisie telle que les charges soient ordonnées en croissance monotone en fonction de leur puissance.

5. Procédé suivant la revendication 1 ou 2, caractérisé en ce qu'il est prévu que la séquence des charges enclenchées en enchaînement temporel dans un cycle de commutation soit choisie telle que les charges soient ordonnées en décroissance monotone en fonction de leur puissance.

6. Procédé suivant l'une quelconque des revendications 1 à 5, caractérisé en ce qu'il est prévu que le temps d'horloge le plus petit possible soit déterminé pour la plus grande charge individuelle rythmée par horloge et la sollicitation par changement de charge maximale admissible du réseau et soit utilisé comme temps d'horloge commun.

7. Procédé suivant l'une quelconque des revendications 1 à 6, caractérisé en ce qu'il est prévu que le temps de période commun soit choisi aussi petit que possible dans le cadre de la sollicitation par changement de charge maximale admissible.

8. Procédé suivant l'une quelconque des revendications 1 à 7, caractérisé en ce qu'il est prévu de calculer déjà au début de la première unité de temps commune les instants d'enclenchement et de déclenchement des charges électriques dans tous les cycles de commutation se déroulant, le cas échéant simultanément, et de commuter les charges de manière correspondante.

9. Procédé suivant l'une quelconque des revendications 1 à 8, caractérisé en ce qu'il est prévu que les charges aient des priorités différentes et que, lors d'un dépassement par excès d'une charge d'ensemble maximale admissible, les temps d'enclenchement de charges de moindre priorité soient réduits suffisamment pour que la charge d'ensemble admissible ne soit pas à nouveau dépassée par excès.

10. Procédé suivant l'une quelconque des revendications 1 à 9, caractérisé en ce qu'il est prévu que les charges à fluctuation relativement faible de la durée d'enclenchement soient placées à l'avant du cycle d'enclenchement

Fig.1

10

EP 0 225 657 B1

Fig.2

Fig.4

Fig.3

Fig.5

EP 0 225 657 B1

| | N₁ | N₂ | Σ Δ t |
|---|---|---|---|
| a.) | 2 | 0 | 2,4 s |
| b.) | 2 | 2 | 2,6 s |
| c.) | 1 | 4 | 1,6 s |
| d.) | 1 | 2 | 1,4 s |
| e.) | 0 | 4 | 0,4 s |

# Fig.6